# DEMANDE DE BREVET EUROPEEN

(11) **EP 1 501 165 A1**
(43) Date de publication de la demande: **26.01.2005**
(21) Numéro de dépôt: 04291806.0
(22) Date de dépôt: 15.07.2004
(51) Int. Cl.: H02G 3/12

(54) **appareillage électrique comprenant un support et au moins un mécanisme d'appareillage deplaceable en translation dans ledit support**

(30) Priorité: 21.07.2003 FR 0308860
(71) Demandeur: LEGRAND, 87000 Limoges (FR); LEGRAND SNC, 87000 Limoges (FR)
(72) Inventeur: Favalessa, Thierry, 87240 Ambazac (FR); Guibert, Jean-Sébastien, 87100 Limoges (FR)
(74) Mandataire: Remy, Fabienne

(57) **Abrégé**

La présente invention concerne un appareillage électrique comprenant au moins un mécanisme d'appareillage (100) pourvu d'un socle (110) contenant des éléments de connexion électrique, et un support (200) sur lequel est rapporté chaque mécanisme d'appareillage, ledit support et ledit socle de chaque mécanisme d'appareillage comportant des moyens de montage complémentaires (211,111) coopérant entre eux.

Selon l'invention, lesdits moyens de montage complémentaires sont agencés pour autoriser, après montage de chaque mécanisme d'appareillage sur le support, un déplacement à translation dudit socle par rapport audit support entre différentes positions prédéterminées (1,2,3).

## Description

La présente invention concerne de manière générale les appareillages électriques comme des prises de courant, des interrupteurs, des disjoncteurs.

Elle concerne en particulier un appareillage électrique comprenant au moins un mécanisme d'appareillage pourvu d'un socle contenant des éléments de connexion électrique, et un support sur lequel est rapporté chaque mécanisme d'appareillage, ledit support et ledit socle de chaque mécanisme d'appareillage comportant des moyens de montage complémentaires coopérant entre eux.

Actuellement, dans les appareillages électriques de ce type déjà connus, le socle du mécanisme d'appareillage est encliqueté sur le support par l'intermédiaire de pattes d'encliquetage dont les dents s'engagent dans des échancrures d'un rebord porté par le support pour s'y accrocher.

Ainsi, une fois encliqueté sur le support, le socle du mécanisme d'appareillage ne peut plus être déplacé par rapport audit support sans être démonté.

Généralement, les supports de tels appareillages électriques connus qui reçoivent plusieurs mécanismes d'appareillage comprennent dans leur rebord plusieurs échancrures d'encliquetage pour autoriser l'encliquetage de chaque socle de mécanisme d'appareillage à différents endroits sur le support afin de permettre à l'installateur notamment d'intervertir deux socles sur ledit support.

Toutefois, les endroits d'encliquetage des socles sur de tels supports sont associés à un niveau de finition donné, c'est-à-dire à des dimensions d'enjoliveurs et de plaque de façade déterminées.

Autrement dit, dans de tels appareillages électriques, les dimensions des enjoliveurs et de la plaque de façade sont déterminées en fonctions des endroits d'encliquetage des socles sur le support.

Ainsi, l'installateur ne peut pas vraiment modifier l'état de finition d'un tel appareillage électrique. Il peut juste éventuellement changer la couleur des enjoliveurs rapportés sur les socles ainsi que la couleur de la plaque de façade ce qui est très limité.

Par rapport à l'état de la technique précité, l'invention propose un nouvel appareillage électrique qui comporte au moins un mécanisme d'appareillage monté sur un support, sur lequel l'installateur peut rapporter des enjoliveurs de tailles différentes et/ou de formes différentes sans le démonter du support, ni le décâbler.

Plus particulièrement, l'invention propose un appareillage électrique tel que défini en introduction, caractérisé en ce que les moyens de montage complémentaires du support et de chaque socle sont agencés pour autoriser, après montage de chaque mécanisme d'appareillage sur le support, un déplacement à translation dudit socle par rapport audit support entre différentes positions prédéterminées.

L'expression « après montage de chaque mécanisme d'appareillage sur le support » signifie ici que, selon l'invention, chaque socle de mécanisme d'appareillage monté sur le support peut être déplacé à translation sur celui-ci sans être démonté ni décâblé.

Ainsi, avantageusement, grâce à l'invention, après avoir assemblé entre elles les différentes parties de l'appareillage électrique, l'installateur peut aisément changer l'enjoliveur à rapporter sur le socle du mécanisme d'appareillage en translatant le socle sur le support pour le placer dans la position sur le support qui est déterminée en fonction de l'enjoliveur choisi de manière notamment que ledit socle soit toujours centré par rapport à l'enjoliveur choisi.

En outre, grâce à l'invention, l'installateur peut, au choix, positionner horizontalement ou verticalement le support muni de ses socles puis, après avoir placer ce support suivant l'orientation choisie, il peut aisément modifier la position relative des socles sur ce support afin de respecter un entraxe donné entre deux socles juxtaposés.

D'autres caractéristiques non limitatives et avantageuses de l'appareillage électrique sont les suivantes :
- lesdits moyens de montage complémentaires sont aptes à glisser l'un sur l'autre pour autoriser le déplacement dudit socle entre lesdites positions prédéterminées,
- lesdits moyens de montage complémentaires sont des moyens d'encliquetage,
- lesdits moyens de montage complémentaires comprennent au moins une glissière et au moins une dent d'encliquetage apte à s'accrocher et à glisser sur ladite glissière,
- chaque glissière appartient audit support et chaque dent d'encliquetage appartient audit socle,
- ledit support et chaque socle comprennent des moyens d'indexation complémentaires pour indexer chaque socle sur le support,
- lesdits moyens d'indexation comprennent au moins une pointe qui coopère avec une série de crans,
- chaque pointe fait saillie d'un bord intérieur du support et la série de crans est prévue sur la tranche d'un rebord bordant l'ouverture dudit socle donnant accès auxdits éléments de connexion électrique,
- le support porte en façade des repères indiquant à l'utilisateur les différentes positions prédéterminées de chaque socle et chaque socle porte sur au moins un de ses bords un repère destiné à être placé en vis-à-vis d'un desdits repères du support,
- ledit support comprend une partie métallique et une partie plastique,
- ladite partie métallique comprend lesdits moyens de montage de chaque socle,
- ladite partie plastique comporte des moyens d'indexation aptes à coopérer avec des moyens d'indexation prévus sur chaque socle pour indexer le socle sur le support,
- ladite partie plastique porte en façade des repères indiquant à un utilisateur les différentes positions prédéterminées de chaque socle monté sur ledit support,
- l'appareillage électrique comprend une pluralité de mécanismes d'appareillage rapportés sur ledit support, lesdits moyens de montage complémentaires étant agencés sur le support et sur lesdits socles desdits mécanismes d'appareillage pour autoriser un déplacement individualisé de chaque socle par rapport audit support de sorte que lesdits socles sont aptes à prendre une pluralité de positions relatives différentes sur ledit support,
- lesdits mécanismes d'appareillage comprennent des socles identiques ou différents,
- lesdits mécanismes d'appareillage portent des enjoliveurs identiques ou différents, et
- chaque socle comprend au moins dans une paroi latérale une ouverture donnant accès à l'espace intérieur dudit socle, cette ouverture étant bordée par un manchon apte à être engagé à coulissement sur ou dans un autre manchon bordant une autre ouverture prévue dans une paroi latérale d'un autre socle juxtaposé, de sorte que les deux manchons forment un tube télescopique de communication entre les espaces intérieurs desdits socles juxtaposés.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un premier mode de réalisation d'un appareillage électrique selon l'invention,
- la figure 2 est vue schématique en perspective de détail du support de la figure 1,
- la figure 3 est une vue schématique arrière en perspective de détail d'un socle de la figure 1,
- la figure 4 est une vue schématique de trois mécanismes d'appareillage accouplés selon l'invention,
- les figures 5A à 5C représentent, vue de face, l'appareillage électrique de la figure 1 dans trois positions relatives différentes des socles de mécanisme d'appareillage sur le support,
- la figure 6 est un schéma montrant le déplacement à translation des socles de l'appareillage électrique de la figure 1 entre deux positions relatives différentes,
- la figure 7 est un schéma montrant le déplacement à translation de deux socles différents d'un appareillage électrique selon l'invention entre deux positions relatives différentes, et
- les figures 8A à 8C représentent, vue de face, un deuxième mode de réalisation de l'appareillage électrique selon l'invention dans trois positions relatives différentes des socles de mécanisme d'appareillage sur le support.

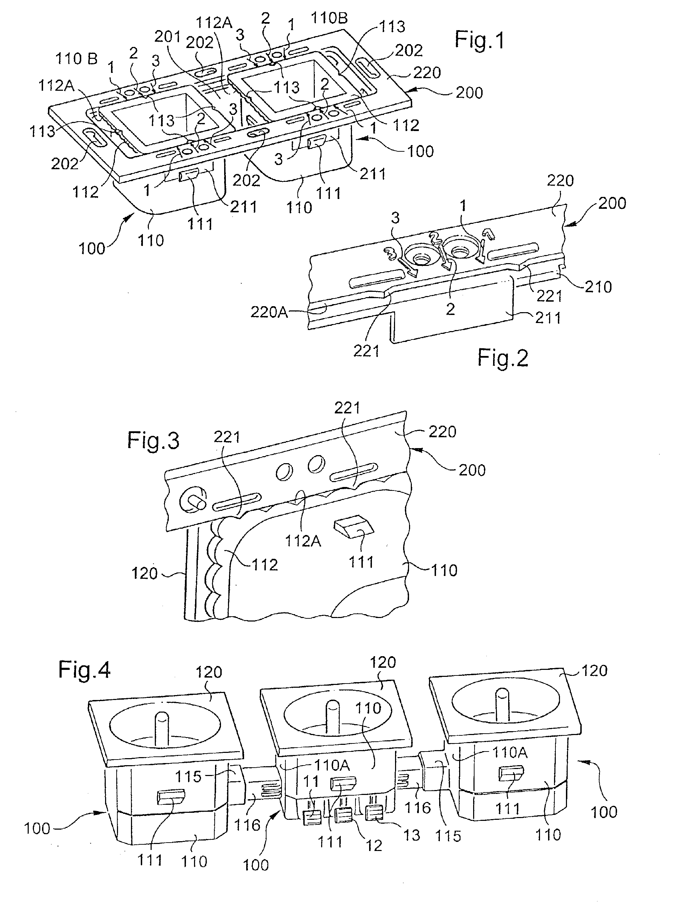

Sur la figure 1 on a représenté un appareillage électrique qui comprend deux mécanismes d'appareillage 100 rapportés sur un support 200.

Le support 200 de l'appareillage électrique est destiné à être fixé à une boîte d'encastrement (non représentée) ou à être encliqueté sur les retours d'ailes d'un socle de goulotte (non représenté). Il se présente sous la forme d'un cadre plat, ici rectangulaire, avec un bord intérieur 220A (voir figure 2) qui délimite une ouverture centrale 201 dans laquelle sont rapportés lesdits mécanismes d'appareillage 100. Le support 200 comporte ici quatre ouvertures traversantes 202 de forme générale oblongue, une sur chaque côté, aux fins de sa fixation à une boîte d'encastrement.

Chaque mécanisme d'appareillage 100 représenté sur la figure 1 comprend un socle 110 qui contient des éléments de connexion électrique 11,12,13 (voir figure 4). Le socle 110 est un boîtier, de forme parallélépipédique carrée ou rectangulaire, comportant un fond fermé à partir duquel s'élèvent des parois latérales 110A et, à l'opposé du fond, une ouverture 110B donnant accès auxdits éléments de connexion électrique qu'il contient. Chaque socle 110 comprend un rebord 112 qui borde ladite ouverture 110B donnant accès auxdits élément de connexion électrique et qui déborde du gabarit du socle 110.

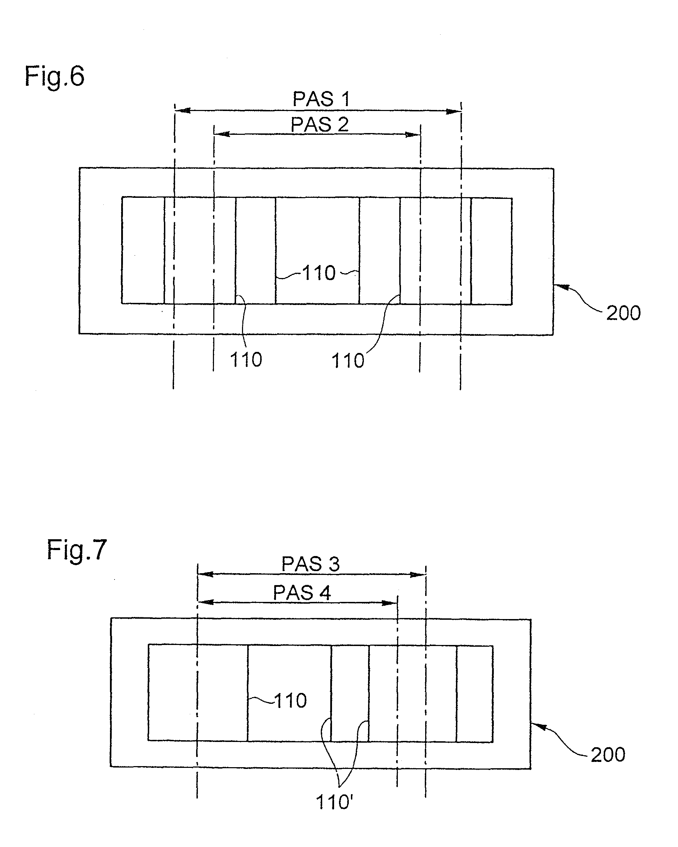

Selon l'exemple représenté sur la figure 1, les deux mécanismes d'appareillage 100 rapportés sur le support 200 comprennent des socles 110 identiques, mais selon une variante de réalisation représentée sur la figure 7, les deux mécanismes d'appareillage rapporté sur le support 200 de l'appareillage électrique selon l'invention comprennent des socles 110,110' différents.

L'ouverture 110B du socle 110 de chaque mécanisme d'appareillage 100 est fermée par un enjoliveur rapporté sur ledit socle 110.

L'enjoliveur rapporté sur le socle 110 du mécanisme d'appareillage 100 peut présenter des formes et des dimensions diverses, mais, en général, le socle 110 du mécanisme d'appareillage 100 est centré sur l'enjoliveur.

Les enjoliveurs rapportés sur les socles 110 de l'appareillage électrique représenté sur la figure 1 peuvent être identiques ou différents en esthétique et/ou en dimensions.

L'enjoliveur donne à l'appareillage électrique sa fonctionnalité. Cela peut être celle d'une prise de courant, ou celui d'un interrupteur simple ou encore d'un va-et-vient.

Selon l'exemple de réalisation représenté sur la figure 4, chaque enjoliveur 120 est un enjoliveur d'une prise de courant et se présente sous la forme d'une plaque carrée qui porte en son centre un puits de réception d'une fiche. Lorsque l'enjoliveur 120 est rapporté sur le socle 110 du mécanisme d'appareillage 100 son puits est engagé dans l'ouverture 110B dudit socle 110 et le bord de sa plaque déborde du rebord 112 dudit socle 110 pour prendre appui sur la plaque de façade (nonreprésentée) rapportée sur le support 200. Le fond du puits de l'enjoliveur 120 comporte trois ouvertures traversantes non représentées, deux de ces ouvertures permettent l'introduction des broches de la fiche dans ledit socle 110 pour leur raccordement aux bornes de connexion électrique qu'il contient et la troisième ouverture permet l'émergence dans ledit puits de la broche de terre.

Chaque enjoliveur 120 est rapporté sur chaque mécanisme d'appareillage 100 après montage de celui-ci sur le support 200. Puis une plaque de façade non représentée est rapportée sur le support 200 pour parfaire l'esthétique de l'appareillage électrique. Cette plaque de façade est encliquetée sur les bords du support 200 et en recouvre toute la surface. Elle comporte alors une ouverture ou plusieurs ouvertures au travers de laquelle ou desquelles émerge(nt) le ou les enjoliveur(s).

Comme le montrent plus particulièrement les figures 1 à 3, le socle 110 de chaque mécanisme d'appareillage 100 et le support 200 comprennent des moyens de montage complémentaires coopérant entre eux pour permettre de rapporter chaque mécanisme sur ledit support.

Avantageusement, selon l'invention, ces moyens de montage complémentaires sont agencés pour autoriser, après montage de chaque mécanisme d'appareillage 100 sur le support 200, un déplacement à translation de chaque socle 110 par rapport audit support 200 entre différentes positions prédéterminées.

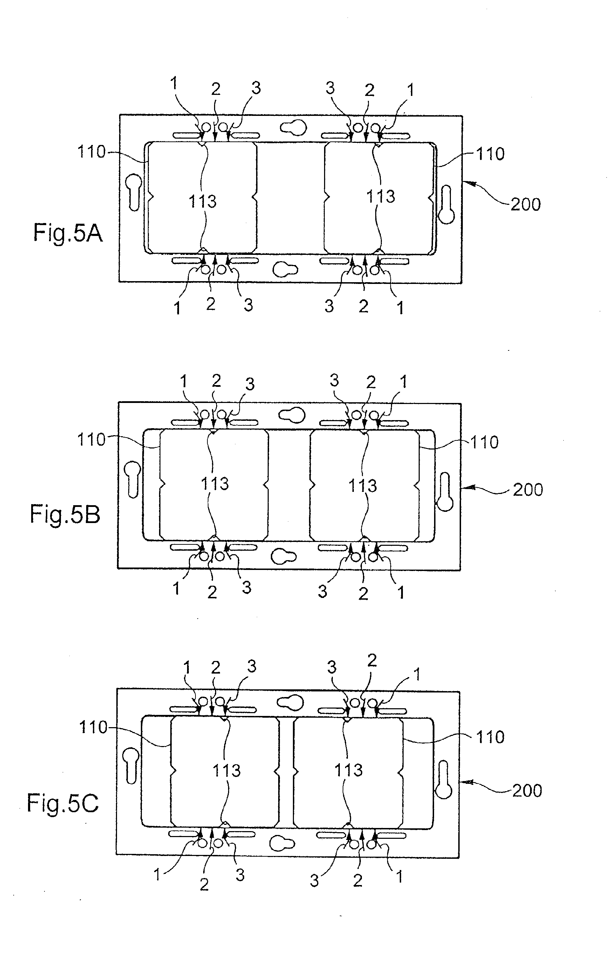

Ici, le support 200 supportant plusieurs mécanismes d'appareillage 100, lesdits moyens de montage complémentaires sont agencés pour autoriser un déplacement individualisé de chaque socle 110 par rapport au support 200 de sorte que lesdits socles 110 sont aptes à prendre une pluralité de positions relatives différentes sur ledit support 200 (voir figures 5A à 5C et 6).

Préférentiellement, ces moyens de montage complémentaires sont aptes à glisser l'un sur l'autre pour autoriser le déplacement de chaque socle entre lesdites positions prédéterminées.

Ici, ces moyens de montage complémentaires sont des moyens d'encliquetage qui comprennent au moins une glissière 211 et au moins une dent d'encliquetage 111 apte à s'accrocher et à glisser sur ladite glissière 211.

Préférentiellement, chaque glissière 211 appartient au support 200 et chaque dent d'encliquetage 111 appartient au socle 110.

Comme le montrent les figures 1 à 3, le support 200 comprend pour chaque socle 110 deux glissières 211 en vis-à-vis aptes à coopérer avec deux dents d'encliquetage 111 prévues en saillie de la face externe de deux parois latérales 110A opposées.

Ici, avantageusement, chaque socle 110 comprend sur chaque paroi latérale 110A une dent d'encliquetage 111.

Les dents d'encliquetage 111 viennent de formation avec chaque socle 110 réalisé par moulage d'une matière plastique.

De manière particulièrement avantageuse, comme le montre la figure 2, le support 200 comprend une partie métallique 210 et une partie plastique 220 qui recouvre la partie métallique 210.

La partie plastique 220 est préférentiellement surmoulée sur la partie métallique 210 et permet de réaliser une isolation électrique.

La partie métallique 210 confère audit support 200 la rigidité requise pour supporter les mécanismes d'appareillage 100 tout en permettant de diminuer son encombrement (épaisseur).

Les glissières 211 sont formées dans la partie métallique 210 du support 200. Elles sont situées sur le bord intérieur dudit support 200 et s'étendent perpendiculairement au plan dudit support 200.

En outre, avantageusement, le support 200 et chaque socle 110 de mécanisme d'appareillage comprennent des moyens d'indexation complémentaires pour indexer chaque socle 110 sur le support 200.

Comme le montrent plus particulièrement les figures 2 et 3, ces moyens d'indexation comprennent au moins une pointe 221 qui coopère avec une série de crans 112A.

Ici, la série de crans 112A est prévue sur la tranche du rebord 112 bordant l'ouverture 110B de chaque socle 110. Cette série de crans 112A s'étend sur tout le pourtour du socle 110.

Il est prévu en correspondance sur le support 200, pour chaque socle 110, deux paires de pointes 221 situées sur des côtés opposés du support 200.

Les pointes 221 sont formées dans la partie plastique 220 du support 200 et fond saillie du bord intérieur 220A dudit support 200. Ces pointes 221 présentent une certaine souplesse et se déforment élastiquement pour passer d'un cran à l'autre du socle 110 lors de son déplacement à translation sur ledit support 200.

Comme le montrent les figures 1 et 2 la partie plastique 220 du support 200 porte en façade des repères, ici des flèches 1,2,3, indiquant à l'installateur les différentes positions prédéterminées de chaque socle 110 de mécanisme d'appareillage. Selon l'exemple représenté, il est prévu trois positions différentes pour chaque socle 110.

Chaque socle 110 porte en correspondance, en face avant, sur au moins un bord de son rebord 112, une encoche 113, formant un repère, destinée à être placée en vis-à-vis d'une des flèches 1,2,3 du support 200.

Ici, le support 200 comporte pour chaque socle 110 sur les deux côtés longitudinaux opposés deux séries de flèches 1,2,3 et chaque socle 110 comprend sur sa face avant une encoche 113 sur chacun de ses quatre côtés.

Avantageusement, selon l'invention, on pourra prévoir que chaque plaque de façade (non représentée) à rapporter sur le support 200 comprend un repère indiquant à l'installateur qu'elle correspond à une des positions prédéterminées 1,2,3 du ou des socles 110 sur le support 200.

Ainsi comme le montrent plus particulièrement les figures 5A à 5C, l'installateur peut déplacer à translation les socles 110 montés sur le support 200 sans les démonter, ni les décâbler pour leurs faire prendre les positions prédéterminées 1,2,3 en fonction des enjoliveurs et de la plaque de façade à rapporter sur lesdits socles 110 et sur ledit support 200 afin d'obtenir un appareillage électrique selon un état de finition donné.

Selon le mode de réalisation représenté sur les figures 5A à 5C chaque socle 110 de mécanisme d'appareillage peut prendre trois positions prédéterminées 1,2,3 sur le support 200 et l'installateur a le choix entre neuf pas différents séparant les deux socles 110. Sur la figure 6 on a schématisé le passage des socles 110 de la position prédéterminée 1 correspondant au pas 1 (voir figure 5A) à la position prédéterminée 2 correspondant au pas 2 (voir figure 5B).

Comme le montre la figure 7, l'installateur peut également monter sur le support 200 des socles 110,110' de mécanisme d'appareillage de formes différentes (carrée et rectangulaire) et les positionner à des pas différents (pas 3, pas 4) pour y rapporter des enjoliveurs différents.

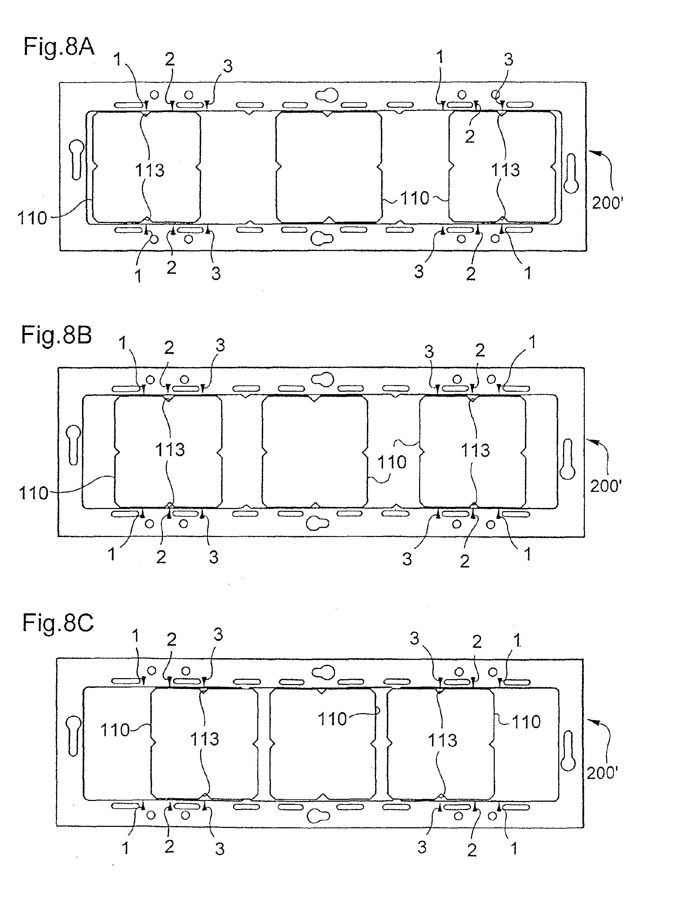

Les figures 8A à 8B montrent une autre mode de réalisation du support 200' de l'appareillage électrique selon l'invention qui se distingue du support 200 essentiellement par le fait qu'il reçoit dans son ouverture centrale trois socles 110 de mécanisme d'appareillage au lieu de deux.

Comme le montrent ces figures, dans ce cas, l'installateur laisse le socle 110 situé au centre fixe et déplace à translation les deux socles 110 situés aux extrémités sur ledit support 200' sans les démonter ni les décâbler pour positionner lesdits socles 110 dans des positions relatives différentes en fonction de l'état de finition souhaité par l'installateur pour l'appareillage électrique. C'est pour cela qu'ici il n'est pas prévu sur le support 200' de repère de positionnement au niveau du socle 110 central.

Il est à noter que, de manière tout à fait avantageuse, le support 200 et le support 200' peuvent être positionnés horizontalement (voir figures 5A à 5C et figures 8A à 8C) ou verticalement, l'installateur pouvant monter lesdits socles 110 sur ces supports quelle que soit leur orientation. Il lui suffit pour cela de les pivoter d'un quart de tour avant de les encliqueter sur le support. Puis, l'installateur translate lesdits socles 110 sur le support 200,200' pour ajuster leur entraxe en fonction de l'orientation choisie.

Comme le montre la figure 4, selon une autre caractéristique avantageuse de l'appareillage électrique selon l'invention qui comprend plusieurs mécanismes d'appareillage 100, chaque socle 110 comprend au moins dans une paroi latérale 110A une ouverture donnant accès à l'espace intérieur dudit socle 110, cette ouverture étant bordée par un manchon 115,116 apte à être engager à coulissement sur ou dans un autre manchon 115,116 bordant une autre ouverture prévue dans une paroi latérale d'un autre socle 110 juxtaposé, de sorte que les deux manchons 115,116 forment un tube télescopique de communication entre les espaces intérieurs desdits socles 110 juxtaposés.

Ainsi, il possible de déplacer à translation les socles 110 situés aux extrémités sur le support 200', sans les démonter, ni les décâbler, alors que seul le socle 110 central qui ne bouge pas est raccordé au réseau d'alimentation électrique via des bornes 11,12,13 et que les deux autres socles 110 sont alimentés électriquement par l'intermédiaire de conducteurs électriques repiqués sur lesdites bornes de connexion dudit socle 110 central et raccordés aux socles 110 d'extrémité via lesdits tubes télescopiques de communication.

La présente invention n'est nullement limitée aux modes de réalisations décrits et représentés mais l'homme du métier saura y apporter toute variante conforme à son esprit.

## Revendications

1. Appareillage électrique comprenant au moins un mécanisme d'appareillage (100) pourvu d'un socle (110) contenant des éléments de connexion électrique, et un support (200;200') sur lequel est rapporté chaque mécanisme d'appareillage (100), ledit support (200;200') et ledit socle (110) de chaque mécanisme d'appareillage (100) comportant des moyens de montage complémentaires (211,111) coopérant entre eux, **caractérisé en ce que** lesdits moyens de montage complémentaires (211,111) sont agencés pour autoriser, après montage de chaque mécanisme d'appareillage (100) sur le support (200;200'), un déplacement à translation dudit socle (110) par rapport audit support (200) entre différentes positions prédéterminées (1,2,3).

2. Appareillage électrique selon la revendication 1, **caractérisé en ce que** lesdits moyens de montage complémentaires (211,111) sont aptes à glisser l'un sur l'autre pour autoriser le déplacement dudit socle (110) entre lesdites positions prédéterminées (1,2,3).

3. Appareillage électrique selon l'une des revendications 1 ou 2, **caractérisé en ce que** lesdits moyens de montage complémentaires (211,111) sont des moyens d'encliquetage.

4. Appareillage électrique selon les revendications 2 et 3, **caractérisé en ce que** lesdits moyens de montage complémentaires (211,111) comprennent au moins une glissière (211) et au moins une dent d'encliquetage (111) apte à s'accrocher et à glisser sur ladite glissière (211).

5. Appareillage électrique selon la revendication 4, **caractérisé en ce que** chaque glissière (211) appartient audit support (200) et chaque dent d'encliquetage (111) appartient audit socle (110).

6. Appareillage électrique selon l'une des revendications 1 à 5, **caractérisé en ce que** ledit support (200) et chaque socle (110) comprennent des moyens d'indexation (221,112A) complémentaires pour indexer le chaque socle (110) sur le support (200).

7. Appareillage électrique selon la revendication 6, **caractérisé en ce que** lesdits moyens d'indexation (221,112A) comprennent au moins une pointe (221) qui coopère avec une série de crans (112A).

8. Appareillage électrique selon la revendication 7, **caractérisé en ce que** chaque pointe (221) fait saillie d'un bord intérieur (220A) du support (200) et la série de crans (112A) est prévue sur la tranche d'un rebord (112) bordant l'ouverture (110B) dudit socle (110) donnant accès auxdits éléments de connexion électrique.

9. Appareillage électrique selon l'une quelconque des revendications précédentes, **caractérisé en ce que** le support (200) porte en façade des repères (1,2,3) indiquant à l'utilisateur les différentes positions prédéterminées de chaque socle (110) et chaque socle (110) porte sur au moins un de ses bords un repère (113) destiné à être placé en vis-à-vis d'un desdits repères (1,2,3) du support (200).

10. Appareillage électrique selon l'une quelconque des revendications précédentes, **caractérisé en ce que** ledit support (200) comprend une partie métallique (210) et une partie plastique (220).

11. Appareillage électrique selon la revendication 10, **caractérisé en ce que** ladite partie métallique (210) comprend lesdits moyens de montage (211) de chaque socle (110).

12. Appareillage électrique selon l'une des revendications 10 ou 11, **caractérisé en ce que** ladite partie plastique (220) comporte des moyens d'indexation (221) aptes à coopérer avec des moyens d'indexation prévus sur chaque socle (110) pour indexer le socle sur le support.

13. Appareillage électrique selon l'une des revendications 10 à 12,
**caractérisé en ce que** ladite partie plastique (220) porte en façade des repères (1,2,3) indiquant à un utilisateur les différentes positions prédéterminées de chaque socle (110) monté sur ledit support.

14. Appareillage électrique selon l'une quelconque des revendications précédentes, **caractérisé en ce qu'**il comprend une pluralité de mécanismes d'appareillage (100) rapportés sur ledit support (200), lesdits moyens de montage complémentaires (211,111) étant agencés sur le support (200) et sur lesdits socles (110) desdits mécanismes d'appareillage (100) pour autoriser un déplacement individualisé de chaque socle (110) par rapport audit support (200) de sorte que lesdits socles (110) sont aptes à prendre une pluralité de positions relatives différentes sur ledit support (200).

15. Appareillage électrique selon la revendication 14, **caractérisé en ce que** lesdits mécanismes d'appareillage (100) comprennent des socles (110) identiques.

16. Appareillage électrique selon la revendication 15, **caractérisé en ce que** lesdits mécanismes d'appareillage (100) portent des enjoliveurs (120) identiques.

17. Appareillage électrique selon la revendication 15, **caractérisé en ce que** lesdits mécanismes d'appareillage (100) portent des enjoliveurs différents.

18. Appareillage électrique selon la revendication 14, **caractérisé en ce que** lesdits mécanismes d'appareillage (100) comprennent des socles (110,110') différents.

19. Appareillage électrique selon l'une des revendications 14 à 18, **caractérisé en ce que** chaque socle (110) comprend au moins dans une paroi latérale (110A) une ouverture donnant accès à l'espace intérieur dudit socle (110), cette ouverture étant bordée par un manchon (115,116) apte à être engager à coulissement sur ou dans un autre manchon (115,116) bordant une autre ouverture prévue dans une paroi latérale d'un autre socle (110) juxtaposé, de sorte que les deux manchons (115,116) forment un tube télescopique de communication entre les espaces intérieurs desdits socles (110) juxtaposés.
